(19) Europäisches Patentamt
European Patent Office
Office européen des brevets

(11) **EP 2 448 006 A1**

(12) **EUROPEAN PATENT APPLICATION**
published in accordance with Art. 153(4) EPC

(43) Date of publication:
**02.05.2012  Bulletin 2012/18**

(51) Int Cl.:
*H01L 31/04* (2006.01)   *G01J 3/00* (2006.01)

(21) Application number: **10792013.4**

(22) Date of filing: **17.06.2010**

(86) International application number:
**PCT/JP2010/060273**

(87) International publication number:
**WO 2010/150695 (29.12.2010 Gazette 2010/52)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **24.06.2009  JP 2009149761**

(71) Applicant: **Konica Minolta Sensing, Inc.
Sakai-shi, Osaka 590-8551 (JP)**

(72) Inventor: **NISHIKAWA Yoshihiro
sakai-shi
Osaka 590-8551 (JP)**

(74) Representative: **Siegert, Georg
Hoffmann · Eitle
Patent- und Rechtsanwälte
Arabellastraße 4
DE-81925 München (DE)**

(54) **LIGHT SOURCE EVALUATION DEVICE, LIGHT SOURCE ADJUSTMENT SYSTEM, LIGHT SOURCE EVALUATION SYSTEM, AND LIGHT SOURCE EVALUATION METHOD**

(57)     Provided are a light source evaluation device, a light source adjustment system, a light source evaluation system, and a light source evaluation method whereby it is possible to evaluate the characteristics of a solar simulator, which is a light source for measuring the characteristics of a solar cell, without creating a reference cell or pseudo cell tailored to the spectral sensitivity of a solar cell to be measured. Said evaluation is performed by calculating an evaluation value of the characteristics of the light emitted by a solar simulator in comparison to natural sunlight on the basis of the spectral irradiance of the light emitted by a solar simulator as measured by a spectroradiometer, the spectral irradiance of natural sunlight, and the pre-measured spectral sensitivity of the solar cell to be measured.

FIG. 2

**Description**

**TECHNICAL FIELD**

The present invention relates to a light source evaluation apparatus, a light source evaluation system, a light source adjustment system, and a method for evaluating a light source, and in particular relates to a light source evaluation apparatus, a light source evaluation system, a light source adjustment system, and a method for evaluating characteristics of a solar simulator, which is a light source for evaluating solar cells.

**BACKGROUND ART**

In order to address the environmental issues and energy issues in these days, solar cells are actively developed, and various kinds of materials such as conventional singly-crystal silicon to amorphous silicon, thin film silicon, organic compound, and dye sensitizing, and various kinds of structures such as conventional single junction type to multi-junction type are being developed.

In this situation, in order to evaluate the photoelectric conversion efficiency of the solar cell, the standards of the standardized evaluation method are defined in IEC60794 and JIS (C8905-C8991). Those standards are summarized in that the amount of power generation of a solar cell is measured under the lighting of an illumination device (hereinafter, referred to as "solar simulator") which emits the light simulating the spectrum and irradiance of the standard sunlight (sunlight having AM1.5).

However, it is difficult for individual inspection agencies and business enterprises to maintain and operate the solar simulator having the same spectrum and irradiance as the standard sunlight. For this reason, in a practical way, a standard cell which has the same spectral sensitivity characteristics as those of a measuring object solar cell is made, and the obtained standard cell is corrected by using a highly approximated simulator having characteristics ultimately close to those of the standard sunlight owned by public institutions (for example, the National Institute of Advanced Industrial Science and Technology in Japan). In individual inspection agencies and business enterprises, measuring object solar cells are measured by use of the solar simulator that are owned and operated by them and are adjusted by using the corrected standard cells.

In this method, the standard cell needs to have the same spectral sensitivity as that of the measuring object solar cell, and whenever a new kind of solar cell is developed, a solar cell which has the standard spectral sensitivity is selected from the produced solar cells to be a new standard cell, and this new cell needs to be corrected at public institutions. This process requires a lot of time, effort, and cost.

In addition, in the case of the thin film laminated solar cell, output characteristics depend a lot on the spectrum of the incident light; thus the solar simulator needs to have a high similarity of the spectrum.

Patent Document 1 describes the method for evaluating the thin film laminated solar cell without using the solar simulator having a high similarity of the spectrum by adjusting the spectral irradiance, in which method the spectral irradiance of the solar simulator is adjusted by using a plurality of standard cell (actually a dummy cell constituted by the solar cell of different kind from the measurement object solar cell) which are produced in reflection of the spectral dependency of the components constituting the thin film laminated solar celL

**RELATED ART DOCUMENT**

**PATENT DOCUMENT**

[0008]

　　Patent Document 1: Japanese Laid-Open Patent Application Publication No. 2006-147755

**SUMMARY OF THE INVENTION**

**OBJECT OF THE INVENTION**

However, in the method of Patent Document 1, when the standard cell (dummy cell) is produced, the thicknesses of the semiconductor layers are intentionally differentiated and the glass filter is laminated in order to reflect the spectral dependency of the component cells; thus it takes a lot of time, effort, and cost to fabricate the standard cell (dummy cell). These problems are caused by fabricating the standard cell (dummy cell) as hardware.

The present invention has been made in view of the afore-mentioned situations, and an object of the present invention is to provide a light source evaluation apparatus, a light source evaluation system, a light source adjustment system, and a method for evaluating a light source in which the characteristics of the solar simulator, which is the light source for measuring a solar cell, without making a standard cell of a dummy cell which has a spectral sensitivity similar to that of the measuring object solar cell.

**MEANS FOR SOLVING THE OBJECT**

An object of the present invention is accomplished by the following configurations.

Item 1. A light source evaluation apparatus for evaluating characteristics of a solar simulator which is a light source used for measuring characteristics of a solar cell, the light source evaluation apparatus comprising:

a spectroradiometer configured to measure a spectral irradiance of light emitted from the solar simulator;
a storage section configured to store a spectral irradiance of sunlight and a previously measured spectral sensitivity of a measuring object solar cell; and
a calculation section configured to calculate an evaluation value for characteristics of light emitted from the solar simulator corresponding to the sunlight, based on the spectral irradiance which is of the light emitted from the solar simulator and measured with the spectroradiometer, and based on the spectral irradiance of the sunlight and the spectral sensitivity of the measuring object solar cell which are stored in the storage section.

Item 2. The light source evaluation apparatus of item 1, further comprising:

a display section,
wherein the light source evaluation apparatus displays the evaluation value or an indicator which is based on the evaluation value and is for adjusting a light amount of the solar simulator.

Item 3. The light source evaluation apparatus of item 1, wherein the calculation section calculates a correction coefficient k, as the evaluation value, for correcting a short-circuit current of the measuring object solar cell, and the correction coefficient k is defined by the following Equation 1:

$$k = (\int S(\lambda) \cdot P(\lambda) d\lambda) / (\int L(\lambda) \cdot P(\lambda) d\lambda) \cdots\cdots \text{Equation 1}$$

where:

S(λ) is the spectral irradiance of the sunlight;
P(λ) is the spectral sensitivity of the measuring object solar cell; and
L(λ) is the spectral irradiance of the light emitted from the solar simulator.

Item 4. The light source evaluation apparatus of item 3, wherein the solar simulator includes a light amount adjustment section configured to adjust light amount, and the light source evaluation apparatus adjusts the light amount of the solar simulator by using the light amount adjustment section so that the correction coeficient k satisfies the following Equation 3:

$$1 - \alpha \leq k \leq 1 + \beta \cdots\cdots \text{Equation 3}$$

where:

α and β are allowable errors.

Item 5. A light source evaluation system for evaluating characteristics of a solar simulator which is a light source used for measuring characteristics of a solar cell, the light source evaluation system comprising:

a spectroradiometer configured to measure a spectral irradiance of light emitted from the solar simulator; and
a controller provided separately from the spectroradiometer, the controller including:

a storage section configured to store a spectral irradiance of sunlight and a previously measured spectral sensitivity of a measuring object solar cell ; and

a calculation section configured to calculate an evaluation value for characteristics of light emitted from the solar simulator corresponding to the sunlight, based on the spectral irradiance which is of the light emitted from the solar simulator and measured with the spectroradiometer, and based on the spectral irradiance of the sunlight and the spectral sensitivity of the measuring object solar cell which are stored in the storage section.

Item 6. The light source evaluation system of item 5, wherein the calculation section includes a calculation section configured to calculate a correction coefficient k, as the evaluation value, for correcting a short-circuit current of the measuring object solar cell, and the correction coefficient k is defined by the following Equation 1:

$$k = (\int S(\lambda) \cdot P(\lambda) d\lambda)/(\int L(\lambda) \cdot P(\lambda) d\lambda) \cdots\cdots \text{Equation 1}$$

where:

$S(\lambda)$ is the spectral irradiance of the sunlight;
$P(\lambda)$ is the spectral sensitivity of the measuring object solar cell; and
$L(\lambda)$ is the spectral irradiance of the light emitted from the solar simulator.

Item 7. The light source evaluation system of item 6, wherein the solar simulator includes a light amount adjustment section configured to adjust light amount, and the controller adjusts a light amount of the solar simulator by using the light amount adjustment section so that the correction coefficient k satisfies the following Equation 3:

$$1 - \alpha \le k \le 1 + \beta \cdots\cdots \text{Equation 3}$$

where:

$\alpha$ and $\beta$ are allowable errors.

Item 8. A light source adjustment system, comprising:

a light source evaluation system of any one of items 5 to 7; and
a solar simulator having a light amount adjustment section which adjusts light amount,
wherein the controller generates a light amount adjustment signal based on the evaluation value and outputs the light amount adjustment signal to the solar simulator.

Item 9. A light source evaluation method for evaluating characteristics of a solar simulator which is a light source for evaluating characteristics of a solar cell, the method comprising:

a storing step for storing a spectral irradiance of sunlight and a previously measured spectral sensitivity of a measuring object solar cell in a storage section;
a spectral irradiance measurement step for measuring a spectral irradiance of light emitted from the solar simulator by using a spectroradiometer; and
a calculation step for calculating in an calculation section a correction coefficient k for a short-circuit current of the measuring object solar cell, based on the spectral irradiance measured with the spectroradiometer, and based on the spectral irradiance of the sunlight and the spectral sensitivity of the measuring object solar cell which are stored in the storage section,
wherein the correction coefficient k being defined by the following Equation 1:

$$k = (\int S(\lambda) \cdot P(\lambda) d\lambda)/(\int L(\lambda) \cdot P(\lambda) d\lambda) \cdots\cdots \text{Equation 1}$$

where:

S(λ) is the spectral irradiance of the sunlight;
P(λ)is the spectral sensitivity of the measuring object solar cell; and
L(λ)is the Spectral irradiance of the light emitted from the solar simulator.

Item 10. The light source evaluation method of item 9, wherein the solar simulator includes a light amount adjustment section configured to adjust light amount, and the light source evaluation method comprises:

a light amount adjustment step for adjusting the light amount of the solar simulator by using the light amount adjustment section so that the correction coefficient k satisfies the following Equation 3:

$$1 - \alpha \leq k \leq 1 + \beta \cdots\cdots \text{Equation 3}$$

where:

α and β are allowable errors.

## ADVANTAGE OF THE INTENTION

According to the present invention, the evaluation value of the characteristics of the light radiated from the solar simulator corresponding to the natural sunlight is calculated based on the spectroradiometer-measured spectral irradiance of the light radiated from the solar simulator, the spectral irradiance of the natural sunlight, and the previously measured spectral sensitivity of the measuring object solar cell; and thus there are provided a light source evaluation apparatus, a light source evaluation system, a light source adjustment system and a method for evaluating a light source which can evaluate the characteristics of the solar simulator, which is a light source for measuring the characteristics of the sola cell, without making a standard cell or a dummy cell which has a spectral sensitivity similar to that of the measuring object solar cell.

## BRIEF DESCRIPTION OF THE DRAWINGS

Fig. 1 is an external schematic diagram showing an example of a configuration of a first embodiment of a light source evaluation apparatus;
Fig. 2 is a block diagram showing an example of the internal configuration of the first embodiment of the light source evaluation apparatus;
Fig. 3 is an external schematic diagram showing an another example of the first embodiment of the light source evaluation apparatus;
Fig. 4 is a flow chart showing a method for evaluating a light source of the first embodiment of the light source evaluation apparatus;
Fig. 5 is a flow chart showing the method for evaluating the light source of a second embodiment of the light source evaluation apparatus;
Fig. 6 is an external schematic diagram of an example of the embodiment the light source evaluation system;
Fig. 7 is a block diagram showing the internal configuration of the embodiment of the light source evaluation system;
Fig. 8 is a flow chart showing a method for evaluating the light source of the embodiment of the light source evaluation system; and
Fig. 9 is a graph showing the spectral irradiance S(λ) of the standard sunlight.

## PREFERRED EMBODIMENT OF THE INVENTION

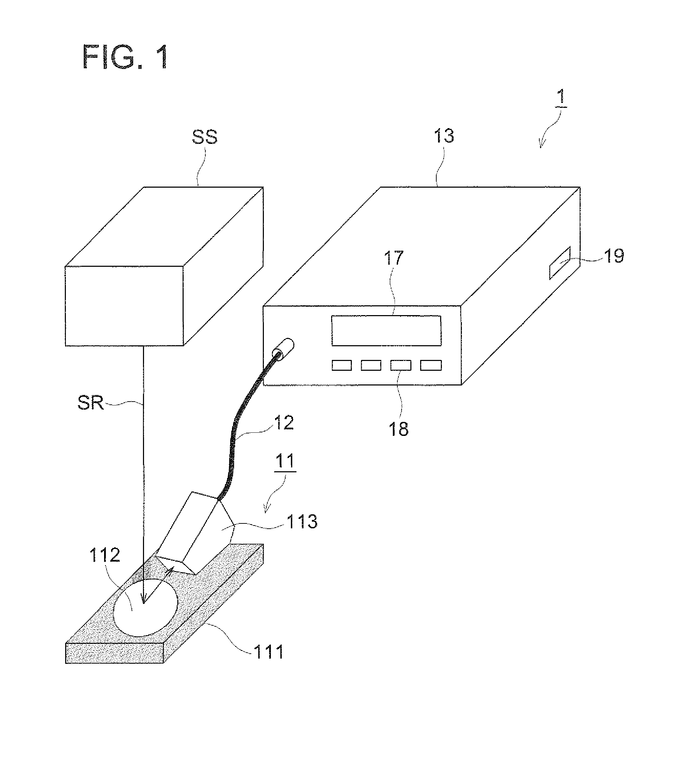

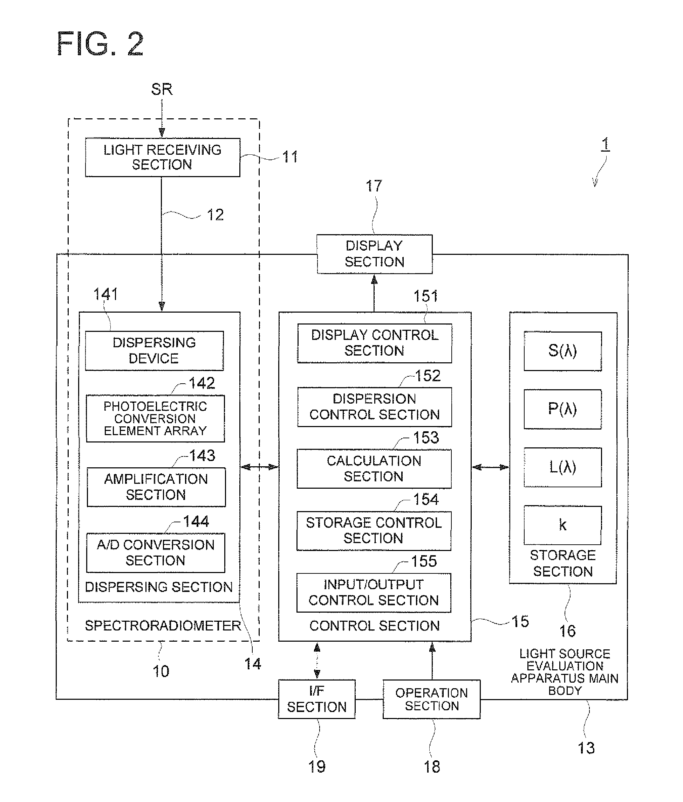

The present invention is described below based on the embodiment shown in the drawings without the present invention being limited thereto. The same or equivalent parts in the drawings are assigned the same numerals, and duplicate description is omitted.
First, a first embodiment of a light source evaluation apparatus according to present invention is described with reference to Fig. 1 and Fig. 2. Fig. 1 is an external schematic diagram showing an example of the configuration of the first embodiment of the light source evaluation apparatus according to the present invention. Fig. 2 is a block diagram showing an example of the internal configuration of the first embodiment of the light source evaluation apparatus.

In Fig. 1, the light source evaluation apparatus is constituted by a light receiving section 11, an optical fiber 12, and a light source evaluation apparatus main body 13. The light receiving section 11 is constituted by a base plate 111, a white reflection plate 112, and a light receiving optical system 113, reflects the light SR emitted from the solar simulator SS by the white reflection plate 112 on the base plate 111, then converges the reflected light SR by the light receiving optical system 113, and leads the light beam SR into the light source evaluation apparatus main body 13 through the optical fiber 12.

The light source evaluation apparatus main body 13 is equipped with a display section 17, an operation section 18, and an interface section (hereinafter, referred to as "I/F section") 19. The detailed description is made with reference to Fig. 2.

In reference to Fig. 2, the light source evaluation apparatus 1 is constituted by the light receiving section 11, the optical fiber 12, and the light source evaluation apparatus main body 13. The light source evaluation apparatus main body 13 is constituted by an dispersing section 14, a control section 15, a storage section 16, the display section 17, the operation section 18, and the I/F section 19.

The dispersing section 14 is constituted by a dispersing device 141, a photoelectric conversion element array 142, an amplification section 143, and an A/D conversion section 144. The dispersing device 141 is a device for dispersing the incident light into its different wavelength components by using a diffraction grating, a prism, or a slit The photoelectric conversion element array 142 is a device for photoelectric converting the incident light dispersed by the dispersing device 141, by using a photodiode array or a CCD image sensor.

The light beam SR emitted from the solar simulator SS is converged by the light receiving section 11, led to the dispersing section 14 inside the light source evaluation apparatus main body 13 through the optical fiber 12, dispersed into its different wavelength components by the dispersing device 141, photoelectric-converted with respect to the different wavelength components by the photoelectric conversion element array 142, and amplified by the amplification section 143 with respect to the different wavelength components, and converted by the A/D conversion section 144 into digital data with respect to the different wavelength components. The light receiving section 11, the optical fiver 12, and the dispersing section 14 constitute the spectroradiometer 10.

The controller 15 is constituted by a display control section 151, a dispersion control section 152, a calculation section 153, a storage control section 154, and an input/output control section 155.

The display control section 151 controls the display on the display section 17. The dispersion control section 152 controls the operation of the spectroradiometer 10 including the dispersing section 14. The calculation section 153 calculates an correction coefficient k for a short-circuit current of a measuring object solar cell PV to be described later, which current is an example of an evaluation value Ev of the light beam SR emitted from the solar simulator SS corresponding to the natural sunlight (here, the standard sunlight). The storage control section 154 controls a storage operation into the storage section 16 and a readout operation of the data stored in the storage section 16. The input/output control section 155 controls the input from the operation section 18 and the input/output from and to external devices through the I/F section 19.

Practically, the control section 15 is constituted by, for example, a CPU, a RO, and a RAM, extends the program stored in the ROM, on the RAM, and performs the functions of the above described sections. When the ROM is a device (PROM) capable of read/write, the program can be updated.

In the storage section 16, there is provided an area for storing a spectral irradiance $S(\lambda)$ of the standard sunlight, a spectral sensitivity $P(\lambda)$ of the measuring object solar cell PV, a spectral irradiance $L(\lambda)$ of the solar simulator SS, and the correction coefficient k for the short-circuit current of the measuring object solar cell PV.

The display section 17 is constituted by display components such as liquid crystal, and it displays, for example, the input content from the operation section 18, the spectral irradiance $S(\lambda)$, the spectral sensitivity $P(\lambda)$ stored in the storage section 16, the spectral irradiance $L(\lambda)$ measured by the dispersing section 14, and the correction coefficient k calculated by the calculation section 153, under the control of the display control section 151.

The operation section 18 is an input section for instructing the dispersing operation in the light source evaluation apparatus 1, the calculation operation of the correction coefficient k, and the input/output operation from and to the external devices through the I/F section 19.

The I/F section 19 performs an interface for performing external input/output of programs and data, for example, performs the input of the spectral irradiance $S(\lambda)$, the spectral sensitivity $P(\lambda)$, the output of the correction coefficient k, and the input of the program for defining the operation of the control section 15.

The external devices in the first embodiment and a second embodiment to be described are a device or a system which communicates programs and data with the light source evaluation apparatus 1 and includes, for example, the device for controlling the operation of the solar simulator SS and the solar simulator SS itself and the light source evaluation apparatus 1 to measure and evaluate the characteristics of the solar cell PV.

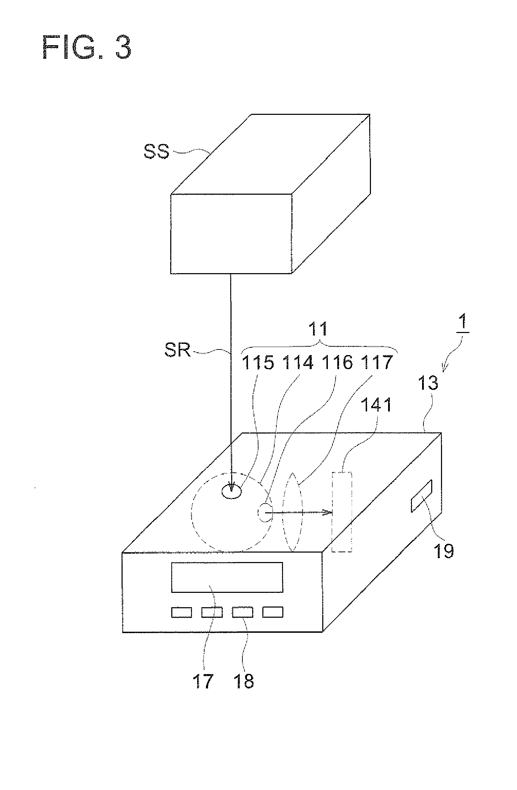

Here, another example of the configuration of the first embodiment of the light source evaluation apparatus is described with reference to Fig. 3.

Fig. 3 is an external schematic drawing showing another example of the first embodiment of the light source evaluation apparatus. The another example of the first embodiment shown in Fig. 3 is a so called all-in-one device in which the light receiving section 11, which is separately provided in Fig. 1, is included in the light source evaluation apparatus main body 13.

Referring to Fig. 3, the light source evaluation apparatus 1 is constituted by a light receiving section 11, a display section 17, an operation section 18, and an I/F section 19; a dispersing section 14, a control section 15, and a storage section 16 not shown in Fig. 3, which are together installed in the light source evaluation apparatus main body 13.

The light receiving section 11 may be constituted by a white reflection plate and a light receiving optical system similar to the first embodiment, but it is shown here to have a configuration in which the light beam SR from the solar simulator SS is received into an integrating sphere 114 through an opening section 115, and the light exiting from an output section 116 of the integrating sphere 114 is led to a dispersing device 141 through an optical system 117 such as a lens.

The descriptions of the other components constituting the light source evaluation apparatus are omitted since they are the same as the components shown in Fig. 1 and Fig. 2.

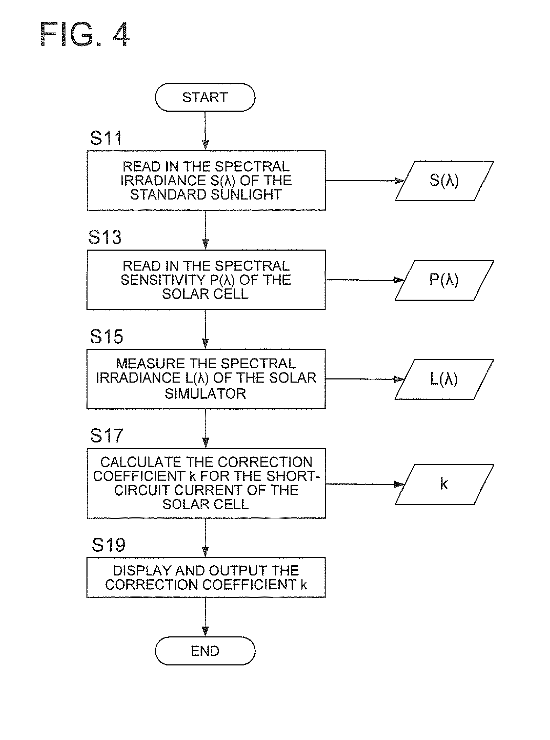

Next, the method for evaluating a light source of the first embodiment of the light source evaluation apparatus is described. Fig. 4 is a flow chart showing the method for evaluating a light source of the first embodiment of the light source evaluation apparatus.

With reference to Fig. 4, in step S11 the spectral irradiance $S(\lambda)$ of the standard sunlight is read in from the external device through the I/F section 19, is stored in the storage section 16, and is read into the calculation section 153. The spectral irradiance $S(\lambda)$ of the standard sunlight is known data, which is defined as an internationally standardized standard, and which is stored in the external device in advance.
The spectral irradiance $S(\lambda)$ of the standard sunlight may be previously stored in the storage section 16.

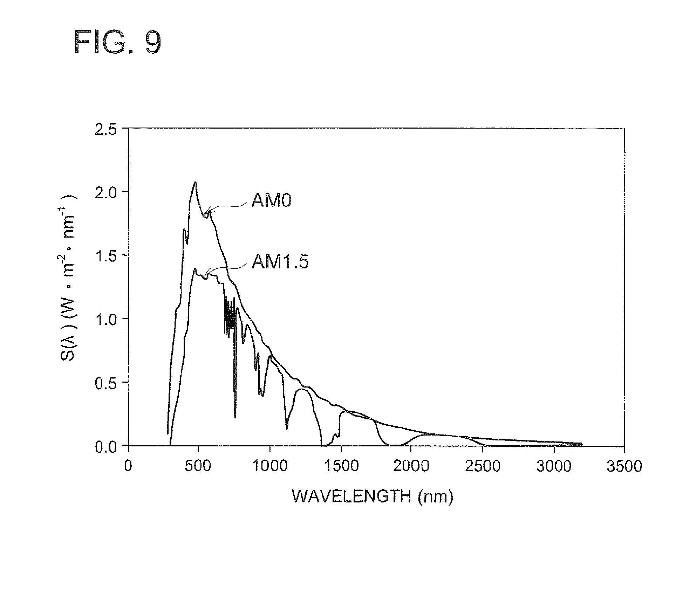

Fig. 9 shows a graph of the spectral irradiance $S(\lambda)$ of the standard sunlight (AM 1.5) together with the spectral irradiance $S(\lambda)$ of the sunlight in the outer space (AM 0). In the present invention, all the sunlights including the standard sunlight (AM 1.5) and the sunlight in the outer space (AM 0) shown in Fig. 9, and the sunlight vertically entering to the earth's surface (AM 1.0) are referred to as the natural sunlight.

In step S13, the spectral sensitivity $P(\lambda)$ of the measuring object solar cell PV is read in from the external device through the I/F section 19, is stored in the storage section 16, and is read into the calculation section 153. The spectral sensitivity $P(\lambda)$ of the measuring object solar cell PV is the data separately measured by using the spectroscope in advance and is stored in the external device. The spectral sensitivity $P(\lambda)$ of the measuring object solar cell PV may be previously stored in the storage section 16. In this arrangement, steps S11 and S13 function as a storing step of the present invention.

In step S15 (spectral irradiance measurement step), the spectral irradiance $L(\lambda)$ of the solar simulator SS is measured by using the spectroradiometer 10 of the light source evaluation apparatus 1, is then read into the calculation section 153, and is stored in the storage section 16 if necessary.

In step S17 (calculation step), the correction coefficient k for the short-circuit current of the measuring object solar cell PV is calculated in the calculation section 153 by the following Equation 1, based on the above-described spectral irradiance $S(\lambda)$ of the standard sunlight, the spectral sensitivity $P(\lambda)$ of the measuring object solar cell PV, and the spectral irradiance $L(\lambda)$ of the solar simulator SS, and is then stored in the storage section 16 if necessary.

$$k = (\int S(\lambda) \bullet P(\lambda) d\lambda) / (\int L(\lambda) \bullet P(\lambda) d\lambda) \cdots\cdots \text{Equation 1}$$

where:

the numerator of the correction coefficient k is the converted short-circuit current for a unit area of the measuring object solar cell PV under the standard sunlight; and
the denominator of the correction coefficient k is the converted short-circuit current for a unit area of the measuring object solar cell PV under the light of the solar simulator SS.

In step S19, the series of operations are finished after the correction coefficient k of the short-circuit current of the measuring object solar cell PV calculated in step S17 is displayed on the display section 17 and output to the external device through I/F section 19 if necessary.

In order to obtain the short-circuit current Isc of the measuring object solar cell PV under the standard sunlight, the short-circuit current Imes of the measuring object solar cell PV under the light emitted from the above-described solar simulator SS can be measured, and the short-circuit current Isc under the standard sunlight then can be calculated according to the following Equation 2:

$$\text{Isc} = k \times \text{Imes} \cdots\cdots \text{Equation 2}$$

As can be understood from Equation 2, the correction coefficient k is a coefficient to make a connection between the short-circuit current Isc under the standard sunlight and the short-circuit current Imes under the light emitted from the solar simulator SS; thus the correction coefficient k is an example of the evaluation value Ev of the characteristics of the light emitted from the solar simulator SS.

Below, there in described an example other than the above-described correction coefficient k of the characteristics of the light emitted from the solar simulator SS corresponding to the standard sunlight.

As another example of the evaluation value Ev, a difference value j of the moderator and the denominator of the correction coefficient k is considered as below, for example:

$$j = (\smallint S(\lambda) \bullet P(\lambda) d\lambda) - (\smallint L(\lambda) \bullet P(\lambda) d\lambda)$$

That is to say, the difference value j is the difference between the converted short-circuit current value per unit area of the measuring object solar cell PV under the standard sunlight and the converted shoit-cbcuit current value per unit area of the measuring object solar cell PV under the light of the solar simulator SS, and when the difference value j is made closer to 0 (zero), the light emitted from the solar simulator SS is made to closer to the standard sunlight.

As described above, according to the first embodiment of the light source evaluation apparatus, the correction coefficient k for the short-circuit current defined by Equation 1 is calculated based on the spectroradiomter-measared spectral irradiance of the light radiated from the solar simulator, the spectral irradiance of the known standard sunlight, and the previously measured spectral sensitivity of the measuring object solar cell; and thus there are provided a light source evaluation apparatus and a method for evaluating a light source which can evaluate the characteristics of the solar simulator, which is a light source for measuring the characteristics of the sola cell, without making a standard cell or a dummy cell which has a spectral sensitivity similar to that of the measuring object solar cell.

In addition, when the spectral irradiance $S(\lambda)$ of the standard sunlight is replaced with the natural sunlight other than the standard sunlight (AM 1.5), for example, the spectral irradiance $S(\lambda)$ of the sunlight in the outer space (AM 0) shown in Fig. 9, the measuring object solar cell PV, which is the short-circuit current Isc in a space station for example, is obtained by calculation from the spectral irradiance $S(\lambda)$ of the sunlight in the outer space (AM 0), the spectral sensitivity $P(\lambda)$ of the measuring object solar cell PV, and the spectral irradiance $L(\lambda)$ of the solar simulator SS, without making the solar simulator SS made to simulate the sunlight of the outer space or bringing the measuring object solar cell into the outer space to measure it.

Similarly, when the spectral irradiance $S(\lambda)$ of the standard sunlight is replaced with the spectral irradiance $S(\lambda)$ of the sunlight (AM 1.0) vertically entering the earth's surface, the short-circuit current Isc of the measuring object solar cell PV under the ecliptic is obtained by calculation.

In addition, in the case that the short-circuit current Isc of the newly developed solar cell PV under the standard sunlight, the short-circuit current Isc is obtained from Equations 1 and 2 by measuring the spectral sensitivity $P(\lambda)$ of the newly developed solar cell PV, replacing the spectral sensitivity $P(\lambda)$ in the Equation 1 with the newly obtained $P(\lambda)$, and measuring the short-circuit current Irnes of the newly developed solar cell PV under the light emitted from the solar simulator SS. There is no need to produce a standard cell or a dummy cell so as to match its characteristics to the characteristics of a newly developed solar cell PV whenever the new solar cell is developed.

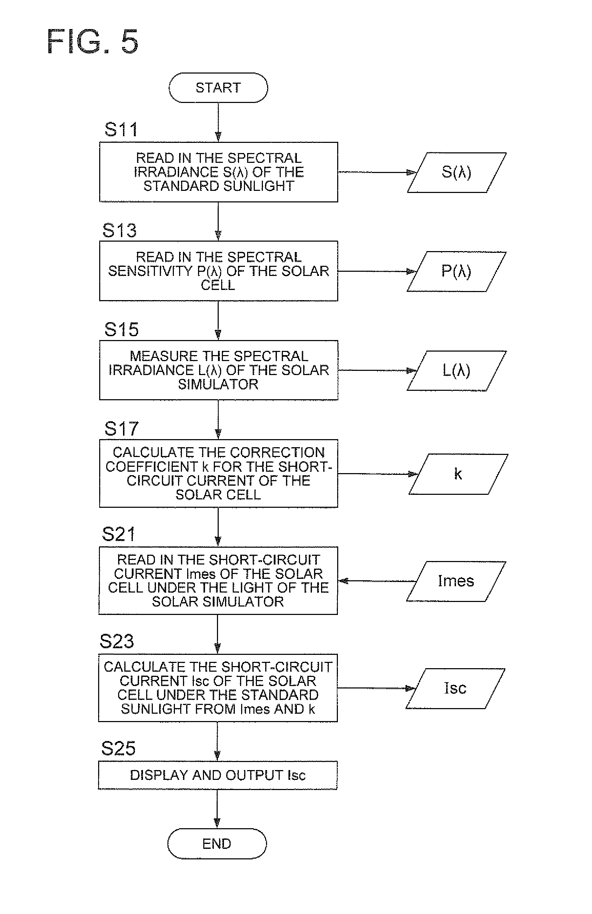

Next, a second embodiment of the light source evaluation apparatus is described with reference to Fig. 5. Fig. 5 is a flow chart showing the method for evaluating the light source of the second embodiment of the light source evaluation apparatus. The second embodiment has the same configuration as the first embodiment.

In the method for evaluating the light source of the first embodiment shown in Fig. 4, the correction coefficient k of the short-circuit current of the measuring object solar cell PV is obtained and output; however in order to obtain the short-cireuit current Isc of the measuring object solar cell PV under the standard sunlight, the short-circuit current Imes of the measuring object solar cell PV under the light emitted from the solar simulator SS needs to be separately measured as described above, and the short-circuit current Isc under the standard sunlight then needs to be calculated. In view of the above issue, in the second embodiment, the light source evaluation apparatus 1 performs the process including the step for obtaining the short-circuit current Isc under the standard sunlight.

In Fig. 5, steps S11 through S17 are the same as in Fig. 4, and the descriptions thereof are omitted.

In step S21, the short-circuit current Imes of the measuring object solar cell PV under the light emitted from the solar simulator SS is measured with an ammeter, and the measured short-circuit current Imes is read into the calculation section 153 through the I/F section 19 and is then stored in the storage section 16 if necessary.

In step S23, by using the correction coefficient k calculated in step S31 and the short-circuit current Imes of the measuring object solar cell PV under the light of the solar simulator SS measured in step 821, the short-circuit current Isc under the standard sunlight is calculated according to the above Equation 2.

In step S25, the series of the processes are finished after the short-circuit current Isc of the measuring object solar cell PV under the standard sunlight calculated in step S23 is displayed on the display section 17 and is output to the external device through the I/F section 19 if necessary.

As described above, according to the second embodiment of the light source evaluation apparatus, in addition to the advantage of the first embodiment, there are provided a light source evaluation apparatus and a method for evaluating a light source which can evaluate the measuring object solar cell PV by calculating the short-circuit current Isc of the measuring object solar cell PV described by Equation 2.

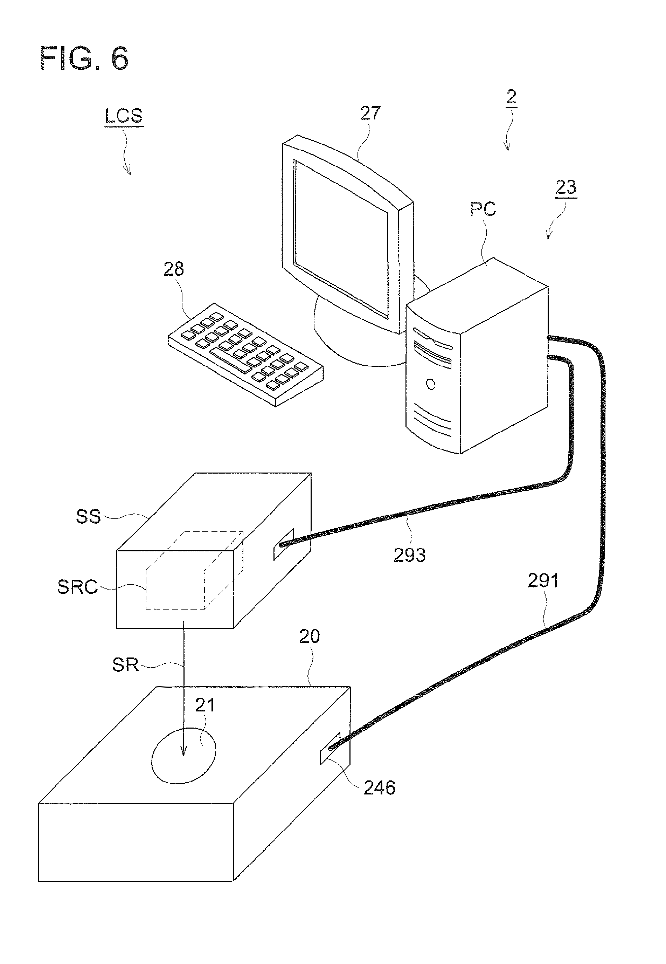

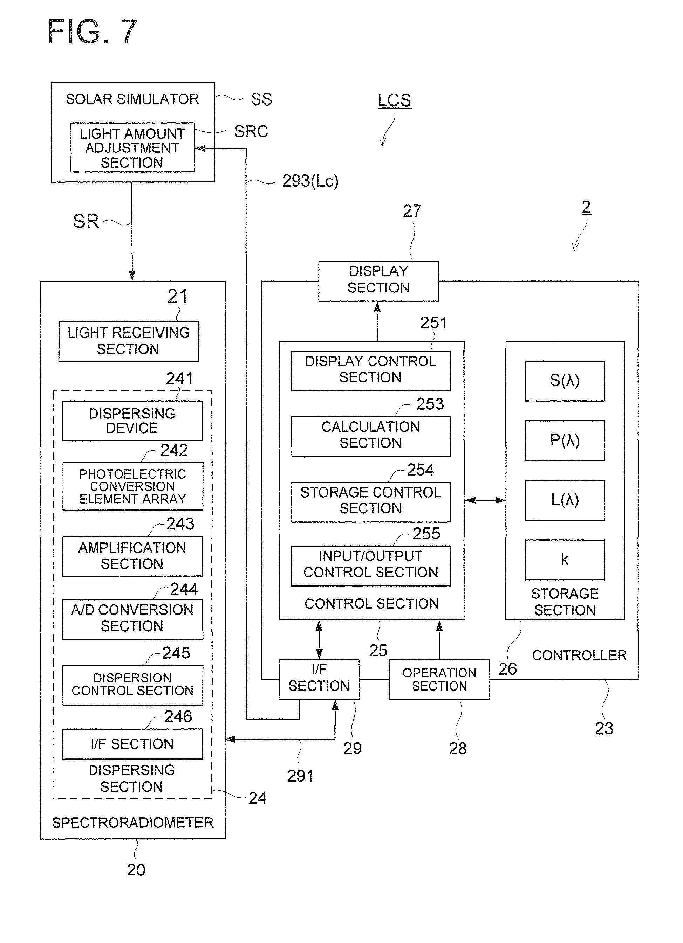

Next, an embodiment of the light source evaluation system and the light source adjustment system of the present invention are described with reference to Fig.6 and Fig. 7. Fig. 6 is an external schematic drawing showing an example of the configuration of the embodiment of the light source evaluation system and the light source adjustment system of the present invention. Fig. 7 is a block diagram showing an example of the internal configuration of the light source evaluation system and the light source adjustment system.

With reference to Fig. 6, the light source evaluation system 2 is constituted by a spectroradiometer 20 and a controller 23. In addition, a light source adjustment system LCS is constituted by the light source evaluation system 2 and the solar simulator SS including a light amount adjustment system SRC.

The spectroradiometer 20 has a light receiving section 21 and an I/F section 246 and is connected to an I/F section 29 of the controller 23 to be described in Fig. 7 through a connection cable 291. The light beam SR emitted from the solar simulator SS is received by the light receiving section 21 and is dispersed in the spectroradiometer 20, and the result of the dispersion is output to the controller 23 through the I/F section 246 and the connection cable 291.

The controller 23 is constituted by a personal computer, for example, and is equipped with a display monitor as a display section 27, a keyboard as an operation section 28. The controller 23 and the spectroradiometer 20 are connected to each other through the connection cable 291. The controller 23 is similarly connected with the solar simulator SS as well through the connection cable 293. The solar simulator SS has the light amount adjustment system SRC for adjusting the light amount of the light beam SR, and the light amount adjustment system SRC adjusts the light amount of the light beam SR emitted from the solar simulator SS according to a light amount adjustment signal Lc from the controller 23, as described later.

With reference to Fig. 7, the light source evaluation system 2 is constituted by the spectroradiometer 20 and the controller 23. Further, the light source adjustment system LCS is constituted by the light source evaluation system 2 and the solar simulator SS including the light amount adjustment system SRC.

The spectroradiometer 20 is constituted by the light receiving section 21 and a dispersing section 14, and the dispersing section 14 is constituted by the dispersing device 241, the photoelectric conversion element array 242, an amplification section 243, an A/D conversion section 244, a dispersion control section 245, and an I/F section 246.

The light receiving section 21 may be constituted by a white reflection plate and a light receiving optical system similarly to the first embodiment, or may be constituted such that the light beam SR from the solar simulator SS is led into an integrating sphere 114 through an opening section 115, and the light output from the integrating sphere 114 is led to the dispersing device 241 through an optical system such as a lens. Alternatively, any known configuration of the spectroradiometer may be employed, in which configuration the light beam SR from the solar simulator SS is led to the dispersing device 241 through an optical system such as a lens.

The dispersing device 241 is a device in which the incident light is dispersed into its different wavelength components by using a diffraction grating, a prism, or a slit The photoelectric conversion element array 242 is a device in which the light dispersed by the dispersing device 241 is photoelectric converted by using a photodiode array or a CCD image sensor.

The light beam SR emitted from the solar simulator SS is received by the light receiving section 21, is dispersed into its different wavelength components by the dispersing device 241, is photoelectric converted with respect to the different wavelength components by the photoelectric conversion element array 242, is amplified with respect to the different wavelength components by the amplification section 243, is converted into digital data with respect to the different wavelength components by the A/D conversion section 244, and is output as the spectral irradiance $L(\lambda)$ of the solar simulator to the controller 23 from the I/F section 246 through the connection cable 291. These operations are controlled by the dispersion control section 245.

The controller 23 is constituted by a control section 25, a storage section 26, a display section 27, the operation section 28, and the I/F section 29. The control section 25 is constituted by a display control section 251, a calculation section 253, an storage control section 254, and an input/output control section 255.

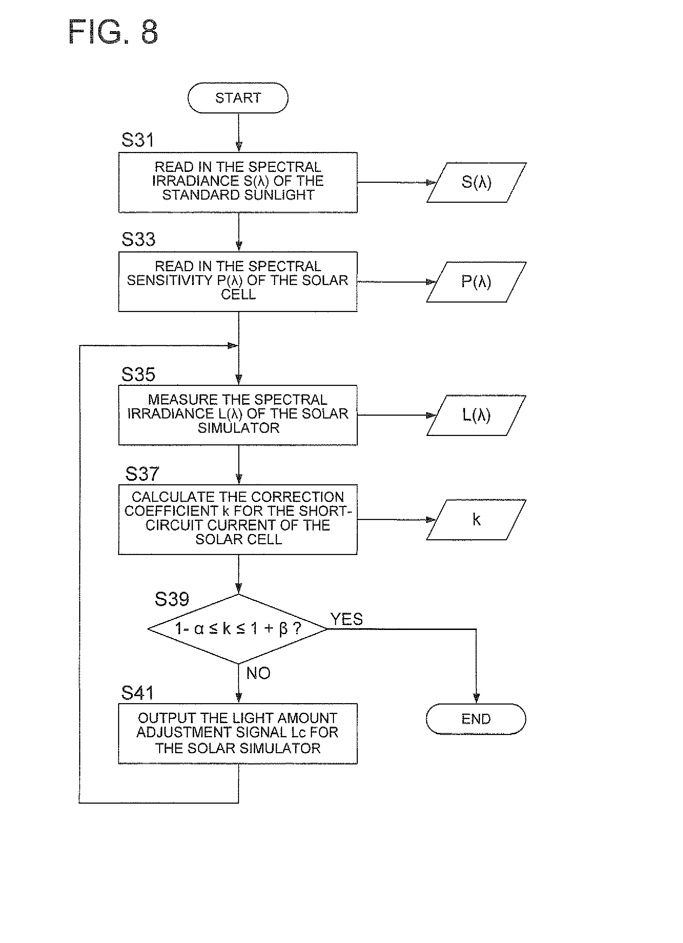

The display control section 251 controls displaying on the display section 27. The calculation section 253 calculates the correction coefficient k for the short-circuit current of the measuring object solar cell PV to be described later, and generates an light amount adjustment signal Lc for the solar simulator SS to be described later with reference to Fig. 8, based on the correction coefficient k.

Instead of the correction coefficient k, the above-described difference value j may be used.

The storage control section 254 controls the storing operation into the storage section 26 and the reading-out operation of the data stored in the storage section 26. The input/output control section 255 controls the input operation from the operation section 28 and the input/output operation from and to the spectroradiometer 20, the solar simulator SS, and the external devices through the I/F section 29.

The storage section 26 is provided with an area for storing the spectral irradiance $S(\lambda)$ of the standard sunlight, the spectral sensitivity $P(\lambda)$ of the measuring object solar cell PV, the spectral irradiance $L(\lambda)$ of the solar simulator SS, the correction coefficient k for the short-circuit current of the measuring object solar cell PV, and the evaluation value Ev such as the difference value j to be described later.

The display section 27 displays, under control of the display control section 251, the content of the input from the operation section 28, the spectral irradiance $S(\lambda)$, the spectral sensitivity $P(\lambda)$ stored in the storage section 26, the spectral irradiance $L(\lambda)$ measured with the spectroradiometer 20, and the evaluation value Ev such as the correction coefficient k and the difference value j calculated by calculation section 253, for example.

The operation section 28 is an input section for instructing, for example, the dispersing operation by the spectroradiometer 20, the calculation operation of the correction coefficient k by the controller 23, and the input/output operation from and to the external devices through the I/F section 29.

The I/F section 29 is an interface for inputting/outputting program and data from and to the external devices, and the I/F section 29 inputs the spectral irradiance $S(\lambda)$ and the spectral sensitivity $P(\lambda)$; inputs the spectral irradiance $L(\lambda)$ of the solar simulator from the spectroradiometer 20; outputs the light amount adjustment signal Lc for the solar simulator SS to be described later with reference to Fig. 8; and inputs the programs defining the operation of the control section 25, for example.

Actually, the controller 23 is constituted by a personal computer PC, for example, and has a display monitor as the display section 27 and the keyboard as the operation section 28. The control section 25 is constituted, for example, a CPU, a hard disk, a ROM, and a RAM, and extends the programs stored in the hard disk onto the RAM, and the components perform the above-described functions of the different sections according to the extended programs. By rewriting the programs on the hard disk, the operation of the light source evaluation system 2 is updated.

Here, the external devices in the embodiment of the light source evaluation system are a device or a system which communicate programs and data to and from the light source evaluation system 2 and includes, for example, a device for controlling the operation of the solar simulator. SS and the solar simulator SS itself and the light source evaluation system 2 to measure and evaluate the characteristics of the solar cell PV.

Next, the method for evaluating a light source of the embodiment of the light source evaluation system and the light source adjustment system is described with reference to Fog. 8. Fig. 8 is a flow chart showing the method for evaluating a light source of the embodiment of the light source evaluation system and the light source adjustment system.

The method for evaluating a light source of the embodiment of the light source evaluation system and the light source adjustment system may be the same method for evaluating a light source as the above-described first and second embodiments of the light source evaluation apparatus, but the method for evaluating a light source to be described here is a method in which the short-circuit current Isc of the measuring object solar cell PV under the standard sunlight and the short-circuit current Imes of the measuring object solar cell PV under the light emitted from the solar simulator SS are matched, similarly to the conventional way, by adjusting the light amount of the solar simulator SS. Alternatively, the method for evaluating a light source shown in Fig. 8 may be applied to the above-described first embodiment of the light source evaluation apparatus.

With reference to Fig. 8, in step S31, the spectral irradiance $S(\lambda)$ of the standard sunlight is read in from the external device through the I/F section 29, is stored in the storage section 26, and is read into the calculation section 253. The spectral irradiance $S(\lambda)$ of the standard sunlight may be stored in the storage section 26 in advance.

In step S33, the spectral sensitivity $P(\lambda)$ of the measuring object solar cell PV is read in from the external device through the I/F section 29, is stored in the storage section 26, and is read into the calculation section 253. The spectral sensitivity $P(\lambda)$ of the measuring object solar cell PV is the data separately measured in advance by using a spectroscope, and is stored in the external device in advance. The spectral sensitivity $P(\lambda)$ of the measuring object solar cell PV may be previously stored in the storage section 26. Steps S31 and S33 here function as the storing step of the present invention.

In step S35 (spectral irradiance measurement step), the spectral in-adiance $L(\lambda)$ of the solar simulator SS is measured by using the spectroradiometer 20 of the light source evaluation system 2, is read into the calculation section 253, and is then stored in the storage section 26 if necessary.

In step S37 (calculation step), the correction coefficient k for the short-circuit current of the measuring object solar cell PV is calculated by the calculation section 253 according to above-described Equation 1 from the above-described spectral irradiance $S(\lambda)$ of the standard sunlight, the spectral sensitivity $P(\lambda)$ of the measuring object solar cell PV, and the spectral irradiance $L(\lambda)$ of the solar simulator SS, and is then stored in the storage section 26 if necessary.

In step S39, it is checked whether the correction coefficient k for the short-circuit current of the measuring object solar cell PV calculated in step S37 satisfies the following Equation 3:

$$1 - \alpha \leq k \leq 1 + \beta \cdots \text{Equation 3}$$

where:

a, β are allowable errors.

In the case that the correction coefficient k does not satisfy Equation 3 (step S39: No), it is judged that the short-circuit current Isc of the measuring object solar cell PV under the standard sunlight and the short-circuit current Imes under the light emitted from the solar simulator SS do not coincide, and then in step S41, the light amount adjustment signal Lc instructing the adjustment of the light amount is issued from the controller 23 to the solar simulator SS through the I/F section 29 and the connection cable 293, and the process goes back to step S35.

The light amount adjustment signal Lc increases the light amount of the solar simulator SS when the correction coefficient k is greater than 1+β, and decreases the light amount of the solar simulator SS when the correction coefficient k is smaller than 1-α. The allowable errors a and β may be appropriately determined so that the measuring object solar cell PV satisfies standards to be followed.

In the solar simulator SS, the light amount is adjusted by being automatically or manually increased or decreased according to the light amount adjustment signal Lc. The adjustment of light amount is preferably performed by a method which does not change the spectral distribution of the solar simulator SS, for example, by controlling the diameter of the aperture diaphragm or by using a neutral density filter. However, if the adjusting amount is not very large, the supply voltage of the lamp used as the light source may be controlled.

In the case of adjusting the light amount manually, the adjustment may be performed by displaying on the display section 27the indicator in characters such as "Increase light" and "Decrease light" or the indicators in symbols such as "▲" and "▼" or "↑" and "↓" to adjust the light amount of the solar simulator SS, based on the evaluation value Ev, instead of displaying the evaluation value Ev such as the correction coefficient k or the difference value j. In addition, the amount of adjustment to be performed, for example, "+5" or "-2", may be displayed, based on the evaluation value Ev such as the correction coefficient k or the difference value j.

In the light source evaluation system 2 or the light source adjustment system LCS, after the light amount of the solar simulator SS is adjusted, step S35 (spectral irradiance measurement step) is performed again to measure the spectral irradiance L(λ) of the solar simulator SS; in step S37 (calculation step) the correction coefficient k is calculated; and in step S39 the correction coefficient k is checked whether it satisfies Equation 3.

The operations in steps S35 through S41 are repeated until the correction coefficient k satisfies Equation 3, and when the correction coefficient k satisfies Equation 3 (step S39:Yes), the adjustment of the light amount of the solar simulator SS is considered to be completed, and the series of the processes are finished. Steps S35 through S41 here fimction as the light amount adjustment step of the present invention.

In this situation, the equation-the short-circuit current Imes of the measuring object solar cell PV under the light emitted from the solar simulator SS = the short-circuit current Isc under the standard sunlight-is considered to be satisfied. Thus, the measuring object solar cell PV can be evaluated by measuring the short-circuit current Imes.

As described above, according to the embodiment of the light source evaluation system and the light source adjustment system, the correction coefficient k for the short-circuit current is calculated based on the spectroradiometer-measured spectral irradiance of the light radiated from the solar simulator, the spectral irradiance of the known standard sunlight, and the previously measured spectral sensitivity of the measuring abject solar cell, and the light amount of the solar simulator is adjusted so that the correction coefficient k falls in the predetermined range of allowable error; thus there are provided a light source evaluation system, light source adjustment system, and a method for evaluating a light source which can match the characteristics of the solar simulator, which is a light source for measuring the characteristics of the sola cell, to the standard sunlight without making a standard cell or a dummy cell which has a spectral sensitivity similar to that of the measuring object solar cell.

As described above, according to the present invention, the evaluation value of the characteristics of the light radiated from the solar simulator corresponding to the natural sunlight is calculated based on the spectroradiometer-measured spectral irradiance of the light emitted from the solar simulator, the spectral irradiance of the natural sunlight, and the previously measured spectral sensitivity of the measuring obj ect solar cell, and thus there are provided a light source evaluation apparatus, a light source evaluation system, a light source adjustment system and a method for evaluating a light source which can evaluate the characteristics of the solar simulator, which is a light source for measuring the characteristics of the sola cell, without making a standard cell or a dummy cell which has a spectral sensitivity similar to that of the measuring object solar cell.

The detailed configurations and the detailed operations of the components constituting the light source evaluation apparatus, the light source evaluation system, the light source adjustment system, and the method for evaluating a light source according to the present invention can be appropriately modified without departing from the spirit of the present invention.

**REFERENCE NUMERALS**

1: Light source evaluation apparatus
2: Light source evaluation system
10, 20: Spectroradiometer
11, 21: Light receiving section
111: Base plate
112: White reflection plate
113: Light receiving optical system
114: Integrating sphere
115: Opening section (of the integrating sphere 114)
116: Output section (of the integrating sphere 114)
117: Optical system
12: Optical fiber
13: Light source evaluation apparatus main body
14, 24: Dispersing section
141, 241: Dispersing device
142, 242: Photoelectric conversion element array
143, 243: Amplification section
144, 244: A/D conversion section
15, 25: Control section
151, 251: Display control section
152, 245: Dispersion control section
153, 253: Calculation section
154, 254: Storage control section
155, 255: Input/output control section
16, 26: Storage section
17, 27: Display section
18, 28: Operation section
19, 29, 246: Interface (I/F) section
23: Controller
291, 293: Connection cable
Ev: Evaluation value (for evaluating characteristics of the light emitted from the solar simulator SS corresponding to the natural sunlight)
LCS: Light source adjustment system
SS: Solar simulator
SR: Light (emitted from the solar simulator SS)
SRC: Light amount adjustment section (in the solar simulator)
Lc: Light amount adjustment signal
Isc: Short-circuit current (of the measuring object solar cell under the standard sunlight)
Imes: Short-circuit current (of the measuring object solar cell under the light emitted from the solar simulator)
$S(\lambda)$: Spectral irradiance of the standard sunlight
$P(\lambda)$: Spectral sensitivity of the measuring object solar cell
$L(\lambda)$: Spectral irradiance of the solar simulator
k: Correction coefficient (for the short-circuit current of the measuring object solar cell)
j: Difference value (of the short-circuit current of the measuring object solar cell)

**Claims**

1. A light source evaluation apparatus for evaluating characteristics of a solar simulator which is a light source used for measuring characteristics of a solar cell, the light source evaluation apparatus composing:

a spectroradiometer configured to measure a spectral irradiance of light emitted from the solar simulator;
a storage section configured to store a spectral irradiance of sunlight and a previously measured spectral sensitivity of a measuring object solar cell; and
a calculation section configured to calculate an evaluation value for characteristics of light emitted from the solar simulator corresponding to the sunlight, based on the spectral irradiance which is of the light emitted from the solar simulator and measured with the spectroradiometer, and based on the spectral irradiance of the sunlight and the spectral sensitivity of the measuring object solar cell which are stored in the storage section.

2. The light source evaluation apparatus of claim 1, further comprising:

a display section,
wherein the light source evaluation apparatus displays the evaluation value or an indicator which is based on the evaluation value and is for adjusting a light amount of the solar simulator.

3. The light source evaluation apparatus of claim 1, wherein the calculation section calculates a correction coefficient k, as the evaluation value, for correcting a short-circuit current of the measuring object solar cell, and the correction coefficient k is denned by the following Equation 1:

$$k = (\int S(\lambda) \cdot P(\lambda) d\lambda)/(\int L(\lambda) \cdot P(\lambda) d\lambda) \cdots \text{Equation 1}$$

where:

S(λ) is the spectral irradiance of the sunlight;
P(λ) is the spectral sensitivity of the measuring object solar cell; and
L(λ) is the spectral irradiance of the light emitted from the solar simulator.

4. The light source evaluation apparatus of claim 3, wherein the solar simulator incudes a light amount adjustment section configured to adjust light amount and the light source evaluation apparatus adjusts the light amount of the solar simulator by using the light amount adjustment section so that the correction coefficient k satisfies the following Equation. 3:

$$1 - \alpha \leq k \leq 1 + \beta \cdots \text{Equation 3}$$

where:

α and β are allowable errors.

5. A light source evaluation system for evaluating characteristics of a solar simulator which is a light source used for measuring characteristics of a solar cell, the light source evaluation system comprising:

a spectroradiometer configured to measure a spectral irradiance of light emitted from the solar simulator; and
a controller provided separately from the spectroradiometer, the controller including:

a storage section configured to store a spectral irradiance of sunlight and a previously measured spectral sensitivity of a measuring object solar cell ; and
a calculation section configured to calculate an evaluation value for characteristics of light emitted from the solar simulator corresponding to the sunlight, based on the spectral irradiance which is of the light emitted from the solar simulator and measured with the spectroradiometer, and based on the spectral irradiance of the sunlight and the spectral sensitivity of the measuring object solar cell which are stored in the storage section.

6. The light source evaluation system of claim 5, wherein the calculation section includes a calculation section configured to calculate a correction coefficient k, as the evaluation value, for correcting a short-circuit current of the measuring object solar cell, and the correction coefficient k is defined by the following Equation 1:

$$k = (\int S(\lambda) \cdot P(\lambda) d\lambda) / (\int L(\lambda) \cdot P(\lambda) d\lambda) \cdots\cdots \text{ Equation 1}$$

where:

S($\lambda$) is the spectral irradiance of the sunlight;
P($\lambda$)is the spectral sensitivity of the measuring object solar cell; and
L($\lambda$)is the spectral irradiance of the light emitted from the solar simulator.

7. The light source evaluation system of claim 6, wherein the solar simulator includes a light amount adjustment section configured to adjust light amount, and the controller adjusts a light amount of the solar simulator by using the light amount adjustment section so that the correction coefficient k satisfies the following Equation 3:

$$1 - \alpha \leq k \leq 1 + \beta \cdots\cdots \text{ Equation 3}$$

where:

$\alpha$ and $\beta$ are allowable errors.

8. A light source adjustment system, comprising:

a light source evaluation system of any one of claims 5 to 7; and
a solar simulator having a light amount adjustment section which adjusts light amount,
wherein the controller generates a light amount adjustment signal based on the evaluation value and outputs the light amount adjustment signal to the solar simulator.

9. A light source evaluation method for evaluating characteristics of a solar simulator which is a light source for evaluating characteristics of a solar cell, the method comprising:

a storing step for storing a spectral irradiance of sunlight and a previously measured spectral sensitivity of a measuring object solar cell in a storage section;
a spectral irradiance measurement step for measuring a spectral irradiance of light emitted from the solar simulator by using a spectroradiometer; and
a calculation step for calculating in an calculation section a correction coefficient k for a short-circuit current of the measuring object solar cell, based on the spectral irradiance measured with the spectroradiometer, and based on the spectral irradiance of the sunlight and the spectral sensitivity of the measuring object solar cell which are stored in the storage section,
wherein the correction coefficient k being defined by the following Equation 1:

$$k = (\int S(\lambda) \cdot P(\lambda) d\lambda) / (\int L(\lambda) \cdot P(\lambda) d\lambda) \cdots\cdots \text{ Equation 1}$$

where:

S($\lambda$) is the spectral irradiance of the sunlight;
P($\lambda$)is the spectral sensitivity of the measuring object solar cell; and
L($\lambda$)is the spectral irradiance of the light emitted from the solar simulator.

10. The light source evaluation method or claim 9, wherein the solar simulator includes a light amount adjustment section configured to adjust light amount, and the light source evaluation method comprises:

a light amount adjustment step for adjusting the light amount of the solar simulator by using the light amount adjustment section so that the correction coefficient k satisfies the following Equation 3:

$$1 - \alpha \leq k\ 1 + \beta \ \cdots\cdots \ \text{Equation 3}$$

where:

a and $\beta$ are allowable errors.

$$1 - \alpha \leq k\ 1 + \beta \ \cdots\cdots \ \text{Equation 3}$$

FIG. 1

# FIG. 2

SR

LIGHT RECEIVING SECTION — 11

— 12

DISPLAY SECTION — 17

1

141

DISPERSING DEVICE

— 142

PHOTOELECTRIC CONVERSION ELEMENT ARRAY

— 143

AMPLIFICATION SECTION

— 144

A/D CONVERSION SECTION

DISPERSING SECTION

SPECTRORADIOMETER

10    14

DISPLAY CONTROL SECTION    151

— 152

DISPERSION CONTROL SECTION

— 153

CALCULATION SECTION

— 154

STORAGE CONTROL SECTION

— 155

INPUT/OUTPUT CONTROL SECTION

CONTROL SECTION    — 15

$S(\lambda)$

$P(\lambda)$

$L(\lambda)$

k

STORAGE SECTION

16

LIGHT SOURCE EVALUATION APPARATUS MAIN BODY

13

I/F SECTION

OPERATION SECTION

19    18

FIG. 3

# FIG. 4

START

S11

READ IN THE SPECTRAL IRRADIANCE S(λ) OF THE STANDARD SUNLIGHT → S(λ)

S13

READ IN THE SPECTRAL SENSITIVITY P(λ) OF THE SOLAR CELL → P(λ)

S15

MEASURE THE SPECTRAL IRRADIANCE L(λ) OF THE SOLAR SIMULATOR → L(λ)

S17

CALCULATE THE CORRECTION COEFFICIENT k FOR THE SHORT-CIRCUIT CURRENT OF THE SOLAR CELL → k

S19

DISPLAY AND OUTPUT THE CORRECTION COEFFICIENT k

END

# FIG. 5

```
                    ( START )
                         │
   S11                   ▼
  ┌──────────────────────────────────┐        ╱────────╲
  │ READ IN THE SPECTRAL             │ ·····▶ ╱  S(λ)   ╱
  │ IRRADIANCE S(λ) OF THE           │        ╲────────╱
  │ STANDARD SUNLIGHT                │
  └──────────────────────────────────┘
                         │
   S13                   ▼
  ┌──────────────────────────────────┐        ╱────────╲
  │ READ IN THE SPECTRAL             │ ─────▶ ╱  P(λ)   ╱
  │ SENSITIVITY P(λ) OF THE SOLAR    │        ╲────────╱
  │ CELL                             │
  └──────────────────────────────────┘
                         │
   S15                   ▼
  ┌──────────────────────────────────┐        ╱────────╲
  │ MEASURE THE SPECTRAL             │ ─────▶ ╱  L(λ)   ╱
  │ IRRADIANCE L(λ) OF THE SOLAR     │        ╲────────╱
  │ SIMULATOR                        │
  └──────────────────────────────────┘
                         │
   S17                   ▼
  ┌──────────────────────────────────┐        ╱────────╲
  │ CALCULATE THE CORRECTION         │ ─────▶ ╱   k     ╱
  │ COEFFICIENT k FOR THE SHORT-     │        ╲────────╱
  │ CIRCUIT CURRENT OF THE           │
  │ SOLAR CELL                       │
  └──────────────────────────────────┘
                         │
   S21                   ▼
  ┌──────────────────────────────────┐        ╱────────╲
  │ READ IN THE SHORT-CIRCUIT        │ ◀───── ╱  Imes   ╱
  │ CURRENT Imes OF THE SOLAR        │        ╲────────╱
  │ CELL UNDER THE LIGHT OF THE      │
  │ SOLAR SIMULATOR                  │
  └──────────────────────────────────┘
                         │
   S23                   ▼
  ┌──────────────────────────────────┐        ╱────────╲
  │ CALCULATE THE SHORT-CIRCUIT      │ ─────▶ ╱   Isc   ╱
  │ CURRENT Isc OF THE SOLAR         │        ╲────────╱
  │ CELL UNDER THE STANDARD          │
  │ SUNLIGHT FROM Imes AND k         │
  └──────────────────────────────────┘
                         │
   S25                   ▼
  ┌──────────────────────────────────┐
  │ DISPLAY AND OUTPUT Isc           │
  └──────────────────────────────────┘
                         │
                         ▼
                    (  END  )
```

# FIG. 6

# FIG. 7

# FIG. 8

START

S31

READ IN THE SPECTRAL IRRADIANCE S(λ) OF THE STANDARD SUNLIGHT → S(λ)

S33

READ IN THE SPECTRAL SENSITIVITY P(λ) OF THE SOLAR CELL → P(λ)

S35

MEASURE THE SPECTRAL IRRADIANCE L(λ) OF THE SOLAR SIMULATOR → L(λ)

S37

CALCULATE THE CORRECTION COEFFICIENT k FOR THE SHORT-CIRCUIT CURRENT OF THE SOLAR CELL → k

S39

$1- \alpha \leq k \leq 1 + \beta$ ?

YES → END

NO

S41

OUTPUT THE LIGHT AMOUNT ADJUSTMENT SIGNAL Lc FOR THE SOLAR SIMULATOR

FIG. 9

<table>
<tr><td colspan="2"><b>INTERNATIONAL SEARCH REPORT</b></td><td colspan="2">International application No.<br><br>PCT/JP2010/060273</td></tr>
<tr><td colspan="4">A.   CLASSIFICATION OF SUBJECT MATTER<br><i>H01L31/04</i>(2006.01)i, <i>G01J3/00</i>(2006.01)i<br><br><br>According to International Patent Classification (IPC) or to both national classification and IPC</td></tr>
<tr><td colspan="4">B.   FIELDS SEARCHED</td></tr>
<tr><td colspan="4">Minimum documentation searched (classification system followed by classification symbols)<br>H01L31/04, G01J3/00<br><br></td></tr>
<tr><td colspan="4">Documentation searched other than minimum documentation to the extent that such documents are included in the fields searched<br>    Jitsuyo Shinan Koho        1922-1996   Jitsuyo Shinan Toroku Koho   1996-2010<br>    Kokai Jitsuyo Shinan Koho   1971-2010   Toroku Jitsuyo Shinan Koho   1994-2010</td></tr>
<tr><td colspan="4">Electronic data base consulted during the international search (name of data base and, where practicable, search terms used)<br><br><br></td></tr>
<tr><td colspan="4">C.   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>X</td><td colspan="2">Yoshihiro HAMAKAWA, Yukinori KUWANO, Taiyo Energy Kogaku, 1st edition, Baifukan Co., Ltd, 20 May 1994 (20.05.1994), pages 53 to 55</td><td>1-10</td></tr>
<tr><td>X</td><td colspan="2">JP 2002-111030 A  (Canon Inc.),<br>12 April 2002 (12.04.2002),<br>paragraphs [0037] to [0039], [0042] to [0050]<br>& US 2002/0030153 A1     & EP 1179857 A2<br>& CN 1341863 A</td><td>1-10</td></tr>
<tr><td>A</td><td colspan="2">GLATFELTER, IEEE Photovoltaic Specialists Conference, 1987, 19th, p.1187-1193</td><td>1-10</td></tr>
<tr><td>A</td><td colspan="2">JP 2008-66431 A  (Nisshinbo Industries, Inc.),<br>21 March 2008 (21.03.2008),<br>entire text; all drawings<br>(Family: none)</td><td>1-10</td></tr>
</table>

☒   Further documents are listed in the continuation of Box C.　　　☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    29 October, 2010 (29.10.10) | Date of mailing of the international search report<br>    09 November, 2010 (09.11.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/060273 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-281706 A  (Japan Science and Technology Agency),<br>07 October 2004 (07.10.2004),<br>entire text; all drawings<br>(Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006147755 A